# EUROPEAN PATENT SPECIFICATION

(11) **EP 4 580 227 B1**
(45) Date of publication and mention of the grant of the patent: **04.02.2026**
(21) Application number: 23383407.6
(22) Date of filing: 29.12.2023
(51) Int. Cl.: H04W 8/18, H04W 12/06, H04W 12/08, H04W 12/30, H04W 8/20, H04W 48/18

(54) **EUICC AUTOMATIC PROFILE SWITCHER**
AUTOMATISCHER EUICC-PROFILSCHALTER
COMMUTATEUR DE PROFIL AUTOMATIQUE EUICC

(43) Date of publication of application: 02.07.2025
(73) Proprietor: Giesecke+Devrient Mobile Security Germany GmbH, 81677 München (DE)
(72) Inventor: Lorente, Raúl, 81677 München (DE); Inguanzo, Miguel, 81677 München (DE); Totev, Georgy, 81677 München (DE)
(74) Representative: LKGLOBAL Partnerschaftsgesellschaft mbB

(56) References cited:
- JP-A- 2022 160 280
- US-A1- 2022 225 093
- US-A1- 2023 328 506

## Description

The present invention relates to a method and an application for enabling eUICC (embedded Universal Integrated Circuit Card) to automatically switch to a private profile, in particular in a field where both public and private networks are available.

### BACKGROUND OF THE INVENTION

Recently, mobile devices configured to employ electronic subscriber profiles for communicating on mobile networks have emerged. Such mobile devices are typically equipped with electronic/embedded secure element devices, such as electronic/embedded universal integrated circuit cards (eUICCs), configured to store one or more electronic subscriber profiles such as electronic subscriber identification module (eSIM) profiles that may allow mobile devices to connect to one or more mobile networks. A subscriber profile (e.g., eSIM profile) may be generated by a mobile network operator (MNO) and may be downloaded to a mobile network device. The subscriber profile may then be installed on a secure element of the mobile device and used for communication over a corresponding mobile network by the mobile device.

ETSI (European Telecommunications Standards Institute) describes and defines in the TS 123.122 V17.6.0 specification an Automatic Network Selection procedure. The procedures defined by ETSI is based on a series of SIM elementary files storing a list of prioritized preferred and allowed networks, which are configured by the MNO. The MNO might use several sets of parameters, where each set applies to a large number of eUICCs. However, end user can also define their own preferences, affecting automatic network selection, but the user's preferences have lower priority then the preferences of the MNO.

The Original Equipment Manufacturers (OEMs) usually have their own networks which are regarded as private networks. The networks of MNOs, for example Vodafone, are regarded as public networks. These private networks of the OEMs are independent from the public networks of MNOs. As a result, the private networks of the OEMs are not present in the MNO profile files. Therefore, there is no possibility for OEMs to prioritize their private networks for their users.

In case that an OEM needs a User Equipment (UE) to successfully attach or connect to its own private network with the aim to share some relevant data during the staying of the UE in an area where both the private network of the OEM and a public network of the MNO are present, for example an electric vehicle as a UE drives into a charging area and the OEM needs to perform a data exchange with the vehicle, a private file corresponding to the private network of the OEM within the card, i.e. eUICC, should be enabled to provide the corresponding credentials for the network attachment.

According to the prior art, in a scenario of coexisting networks coverage, i.e. both a public network and a private network are present in an area, although the User Equipment (UE) in principal is able to scan for all the networks (including private ones) that radiate in the area where the UE currently is located, it will not automatically scan for the private network and try attaching to it, because the UE does not know that the private network is prioritized.

As a result, the eUICC is not able to seamlessly notice that the private network is present and automatically switch the operational profile to a private profile corresponding to the private network.

US 2022 / 0 225 093 A1 describes aspects of 5G system that supports Public Land Mobile Network and Non-Public Network especially in the context of how the UE can handle multiple subscriptions when connecting to a Non-Public Network. A method for a User Equipment (UE) and a User Equipment (UE) are described. The method comprises the method steps of performing, by using a first Universal Subscriber Identity Module (USIM) application, an authentication for a normal network operation; and performing, by using a second USIM application, an authentication for a Non-Public Network (NPN), wherein the first USIM application includes a first set of security credentials stored in a first storage in a Universal Integrated Circuit Card (UICC), and the second USIM application includes a second set of security credentials stored in a second storage in the UICC.

It is therefore desirable to provide a method to make the UE scan for and attempt to attach to the private network, where the attempt to attach to the private network is reported to the eUICC to switch the operational profile to an appropriate private profile corresponding to the private network to allow a successful attachment.

### SUMMARY OF THE INVENTION

The present invention addresses the above object by the subject-matter covered by the independent claims. The claims define the invention. Preferred embodiments of the invention are defined in the dependent claims.

According to a first aspect of the present invention, there is provided a method for allowing a UE, User Equipment, to automatically attach or connect to a private network, by using a UICC, Universal Integrated Circuit Card, application. The method comprises the step of prioritizing, by the UICC application, the private network by replacing content of public EHPLMN, Equivalent Home Public Land Mobile Network of a public profile with a cumulative private EHPLMN list which contains the private network. The content of public EHPLMN of the public profile may refer to the EHPLMN list of the public profile. The method further comprises the step of switching, by the eUICC, to a private profile corresponding to the private network, when the UE tries to attach or connect to the private network, while the public profile is still enabled, wherein the private profile contains credentials for the attachment or connection.

The proposed solution allows the eUICC application firstly to internally gather EHPLMNs from all private and disabled profiles stored on the eUICC to generate a cumulative private EHPLMN list and then transmits the cumulative private EHPLMN list to the UE as if it were EHPLMN list of a currently enabled public profile. That is, the eUICC does not return the content of original EF_EHPLMN of the currently enable public profile back to the UE as it does in the prior art, but the cumulative private EHPLMN list generated by an eUICC application. After obtaining the cumulative private EHPLMN list, once the UE enters into an area where both the public network corresponding to the currently enabled public profile and the private network corresponding to a disabled private profile are present, the UE will try to attach to the private network (as it has a higher priority than the current public network, thanks to the content of the cumulative private EHPLMN list). Because of that, the eUICC will be informed about that attachment attempt (using an available standard mechanism) and can switch to the appropriate private profile, while the public profile is currently enabled, i.e., active.

Moreover, the proposed solution provides an offline mechanism of profile-switching. In this context, the word "offline" means that a decision on what profile to enable is made locally on eUICC, on a basis of the eUICC configuration and current network events, without any interaction with any server. The advantage of the offline mechanism is that the switching to a proper profile can be done even if currently enabled profile has no connectivity, i.e. no communication with any server.

Preferably, the step of prioritizing the private network further comprises a step of hacking, by the eUICC application, Read Binary command response of EF_EHPLMN file of the public profile, when UE reads the EF_EHPLMN file during its initialization.

"EF_EHPLMN" stands for Elementary File Equivalent Home Public Land Mobile Network, which is a specific file on the eUICC that contains the list of EHPLMNs, or networks that are considered equivalent to the home network for the purpose of network selection. "Read Binary command" is a specific command that is sent to the eUICC to read the binary data contained in the EF_EHPLMN file. "Command response" is the data returned by the eUICC after the "Read Binary command" has been executed. Therefore, the " Read Binary command response of EF_EHPLMN file" refers to a list of EHPLMNs of the public profile which is currently enabled. The list of EHPLMNs is returned by the eUICC to the UE after a Read Binary command has been executed on the EF_EHPLMN file.

Preferably prioritizing the private network further comprises the step of configuring, by the eUICC application, a list of private profile entries containing one or more operational profile filter conditions, the step of iterating, by the eUICC application, through the private profile entries when the UE starts up and the step of building, by the eUICC application, a cumulative private EHPLMN table containing the cumulative private EHPLMN list which comprises EHPLMN items from each private profile and their corresponding private profiles.

Before the UE starts up, e.g. powering on of the UE or resetting of the eUICC, the eUICC application has configured a list of private profile entries. The list of entries contains one or more operational profile filter conditions. That is, the list of entries provides a sequence or an order to filter the private profiles stored in the eUICC. When the UE starts up, the eUICC application iterates all the entries in the list. According to the sequence or the order with regard to the private profiles provided by the list, EHPLMN items in each private profile are gathered in the cumulative private EHPLMN list. It may happen that EHPLMN items of a private profile is not gathered into the cumulative private EHPLMN list, because this private profile is filtered out by the list of private profile entries. The cumulative private EHPLMN list is contained in the cumulative private EHPLMN table which also contains the names of the private profiles to which each EHPLMN item in the cumulative private EHPLMN list belongs. The EHPLMN item may refer to a PLMN which is combination of MCC and MNC.

Preferably, switching to the private profile of the private network comprises a step of receiving, by the eUICC, an event of the UE, a step of extracting, by the eUICC, MCC, Mobile Country Code, /MNC, Mobile Network Code, value from data of the event, a step of searching, by the eUICC, a value matching the extracted MCC/MNC value, a step of identifying, by the eUICC, the private profile according to the searched value and a step of activating, by the eUICC, the private profile.

The event may refer to Network Rejection or Location Status. The "Network rejection" refers to a situation where a UE with an eUICC is not allowed to connect to a specific network. This could happen when the UE is out of the coverage area of the network associated with the active eUICC profile. "Location Status" is a notification or update that's triggered when there's a change in the UE's network location. This could happen, for example, when the UE moves from one cell to another, or from one tracking area to another. An event will be received by the eUICC, when the UE enters into an area where both the public network (corresponding to the currently enabled public profile) and the private network (corresponding to the currently disabled private profile) are present. The event data contains a PLMN value which is a combination of MCC and MNC. This value is extracted by the eUICC and used to search a value matching the extracted value in the cumulative private EHPLMN list. Once the matching value in the cumulative private EHPLMN list is found out, the private profile corresponding to the matching value is identified by referring to the cumulative private EHPLMN table which contains both the cumulative private EHPLMN list and the names of the corresponding private profiles. After identifying the private profile, the eUICC automatically switches the operational profile to the private profile which contains proper credentials to make the attachment succeed.

Preferably, the one or more operational profile filter conditions comprises whether profile IMSI, International Mobile Subscriber Identity, matches a predetermined pattern and/or whether profile ISDP AID, Application Identifier, matches a predetermined pattern and/or whether profile ICCID, Integrated Circuit Card Identification Number, matches a predetermined pattern.

The "predetermined pattern" with regard to IMSI may refer to a specific range of IMSI numbers, a particular mobile network operator, or some other criterion. For example, an eUICC may be programmed to only use profiles, whose IMSI number falls within a certain range. Or, if a UE with an eUICC is being used for an international roaming service, the IMSI may be used to determine the appropriate profile of a local network to connect to. To determine whether a profile's IMSI matches a predetermined pattern, one would typically need to compare the IMSI number associated with that profile to the pattern or rule that's been set up. This could involve checking whether the IMSI falls within a certain numerical range, whether it starts or ends with certain digits, or whether it contains certain sequences of digits.

ISDP stands for "Issuer Security Domain Provile". It is a specific area of the eUICC file system dedicated to a particular profile, such as a network operator profile. Each ISDP is identified by an AID (Application Identifier) which is a unique identifier that helps the eUICC to find and select the appropriate profile when needed. When we talk about "whether profile ISDP AID matches a predetermined pattern," it's similar to the discussion about the IMSI matching a predetermined pattern. The "predetermined pattern" in this context could refer to a specific range of AID numbers, a particular network operator or other criterion.

ICCID stands for Integrated Circuit Card Identifier which is a unique serial number that identifies each profile on an eUICC. When we talk about "whether profile ICCID matches a predetermined pattern," it's about comparing the ICCID associated with a particular profile on the eUICC to some sort of rule or pattern that's been defined.

Preferably, the credentials are network authentication parameters or values which are used to attach a network. The credentials may include IMSI (International Mobile Subscriber Identity) which is a unique identifier that links a mobile subscriber to a specific network, Authentication Key (Ki) which is a secret key that is used for authentication purposes, while the same key is stored in the network's Authentication Center (AuC), OPC which is a value derived from the operator variant algorithm and the Ki and used in the authentication and ciphering process. Additionally, information stored in MSISDN (Mobile Station International Subscriber Directory Number) which is the telephone number associated with each profile on the eUICC, ICCID (Integrated Circuit Card Identifier) which is the unique serial number for each profile on the eUICC and LOCI (Location Information), and EPS LOCI which are files storing the last known location of the subscriber and being used in the process of connecting to the network, can be used for network authentication.

Preferably, service N°71 is enabled by the eUICC application, such that the EHPLMN file presents on card, so that UE can read the EHPLMN file and uses the contents of the EHPLMN file. For this, a UST (USIM Service Table) file, that contains a list of numbered services can be adjusted by the eUICC. The UST file contains a list of bits (0/1), where each bit defines if the corresponding services is supported by the card. The UE reads the UST file at startup in order to check the card capabilities. Service N°71 can then be enabled by setting the 71th bit to 1. EHPLMN (Equivalent Home Public Land Mobile Network) is a concept used in mobile communications to indicate networks that should be treated as "home" networks by a UE. N°71 refers to a specific 3GPP (3rd Generation Partnership Project) technical specification, namely TS 31.102. This specification outlines the characteristics of the UICC (Universal Integrated Circuit Card) application toolkit for the "USIM" application, which is the application on a SIM card that allows it to connect to 3G, 4G, and 5G networks.

When it says "service N°71 is enabled by the eUICC application," it means that the eUICC has been programmed to support the functionality described in these specifications. In other words, the UE is capable of treating certain networks as home networks by reading the EHPLMN content from the eUICC, and it also supports the functionality described in the 3GPP's TS 31.102 specification.

Preferably, the cumulative private EHPLMN list is derived from individual EHPLMN of each private profile. Each private profile has its own EHPLMN list containing a plurality of PLMNs. Because profiles that contain EHPLMs are filtered out and ordered, at least part of these PLMNs are filtered out and set in a predetermined or required order to generate the cumulative private EHPLMN list. However, there is no filtering and ordering of PLMNs within the same profile.

According to a second aspect of the present invention, there is provided an eUICC application for allowing a UE, User Equipment, to attach or connect to a private network.

The eUICC application is configured to enable the UE to prioritize the private network by replacing content of public EHPLMN, Equivalent Home Public Land Mobile Network, with a cumulative private EHPLMN list which contains the private network, and when the UE tries to attach or connect to the private network, enable the eUICC to switch to a private profile corresponding to the private network, while the public profile is currently enabled, wherein the private profile contains credentials for the attachment or connection.

Preferably, the UICC application is further configured to hack Read Binary command response of EF_EHPLMN file of the public profile, when UE reads the EF_EHPLMN file during its initialization.

Preferably, to enable the UE to prioritize the private network, the eUICC application is further configured to configure a list of private profile entries containing one or more operational profile filter conditions, when the UE starts up, iterate through the private profile entries, build a cumulative private EHPLMN table containing the cumulative private EHPLMN list which comprises EHPLMN items from each private profile and their corresponding private profiles and return the cumulative private EHPLMN list to the UE.

Preferably, the eUICC application is configured to enable services of EHPLMN and N°71.

Preferably, the eUICC application is configured to derive the cumulative private EHPLMN list from individual EHPLMN of each private profile.

According to a third aspect of the invention, there is provided an eUICC comprising an eUICC application according to the second aspect described above.

According to a fourth aspect of the invention, there is provided a computer program product, comprising instructions which, when the program is executed by a computer, cause the computer to allow a UE, User Equipment, to automatically attach or connect to a private network, by using a UICC, Universal Integrated Circuit Card, application by prioritizing, by the eUICC application, the private network by replacing content of public EHPLMN, Equivalent Home Public Land Mobile Network, with a cumulative private EHPLMN list which contains the private network and, when the UE tries to attach or connect to the private network, by switching, by an eUICC, to a private profile corresponding to the private network, while the public profile is still enabled, wherein the private profile contains credentials for the attachment or connection.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- Fig. 1: shows a scenario illustrating the relationship between different parties;
- FIG. 2: shows a flow chart of a method for allowing a UE to automatically attach to a private network by using an eUICC application; and
- FIG. 3: shows a process of configuring a list of private profiles which are sorted in a required order according to one or more operational profile filter conditions contained in a table.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted. In the drawings, like numerals refer to the same or similar functionality throughout the several views.

Through this specification, the term "eUICC" is understood as an integrated circuit, IC, that is intended to securely store at least one subscription profile having profile data. A "profile" on an eUICC (Embedded Universal Integrated Circuit Card), also known as an embedded SIM or eSIM, refers to the set of information needed for a device to connect to a specific mobile network operator, wherein the information includes ICCID (Integrated Circuit Card Identifier) which is a unique serial number for the SIM, IMSI (International Mobile Subscriber Identity) which identifies the user of the mobile network and is stored on the network's subscriber database, Authentication Key (Ki) which is a secret key used to authenticate the SIM on the mobile network as well as MCC (Mobile Country Code) and MNC (Mobile Network Code) which identify the mobile network operator. In addition, a profile in an eUICC may contain a profile name.

MCC is a three-digit number that identifies the country in which the mobile network operator is located and MNC is a two- or three-digit number that identifies the specific mobile network operator within a country. Together, the MCC and MNC form the PLMN (Public Land Mobile Network) identifier. This globally unique identifier is used to distinguish networks in different countries and to identify the home network of a mobile subscriber. The PLMN is a critical part of the information stored in a profile on an eUICC, as it's needed for a device to connect to a cellular network.

Public Land Mobile Network (PLMN) refers to a network established and operated by an administration or by a recognized operating agency (ROA) for the specific purpose of providing land mobile telecommunications services to the public. The term "home" in EHPLMN indicates the network that a mobile device belongs to or has a subscription with, which could be different from the network that the device is currently connected to (e.g., when roaming). The "equivalent" part of EHPLMN refers to the idea that there can be multiple networks that a device sees as essentially the same as its home network. These equivalent networks could be different networks operated by the same company or networks from different companies that have agreements to treat each other's customers as their own. The list of EHPLMNs is stored on a device's eUICC, and the device uses this list to decide which network to connect to. If a device is in a location where multiple networks are available, it will prefer networks on its EHPLMN list over other networks.

When a "profile" is said to be "enabled", it means that the profile is currently active and in use by the device. An eUICC can store multiple profiles, but generally only one profile can be enabled at a time. When a profile is enabled, the device uses the information in that profile to connect to the corresponding network.

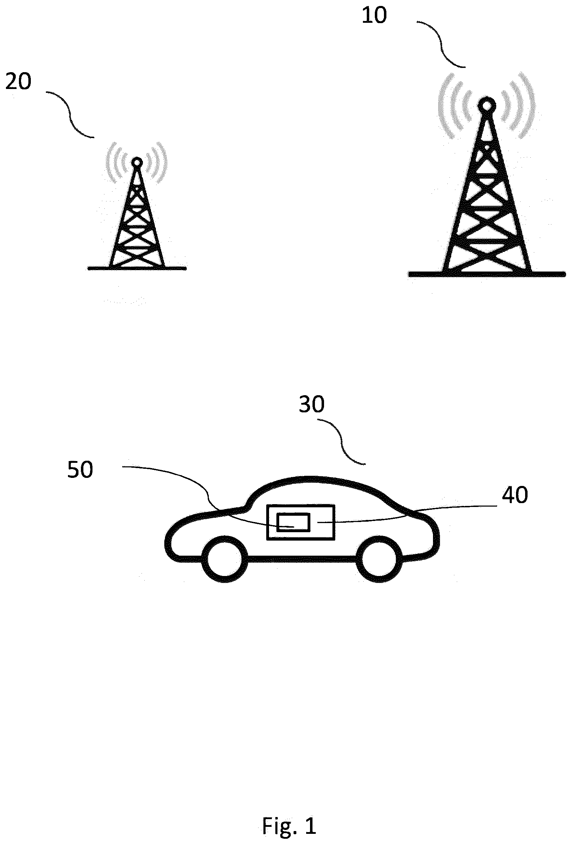

Fig. 1 shows a scenario illustrating the relationship between different parties.

A UE 30 may be a vehicle produced by an OEM. Nearby there are a public network 10 from the MNO, e.g. Deutsche Telecom, and a private network 20 from the OEM. The UE 30 comprises an eUICC 40 which may be embedded within a telematics control unit (TCU) or a communication module. The TCU is responsible for transmitting and receiving signals from the car to other devices or networks. It's the main hub for sending and receiving data, such as GPS signals, data from onboard sensors, or even entertainment data. The exact location of the TCU within a car can vary depending on the manufacturer and the specific model of the car. However, it's often placed in a secure and protected location, such as under the dashboard, inside the center console, or within the trunk area. An eUICC application 50 is installed on the eUICC 40.

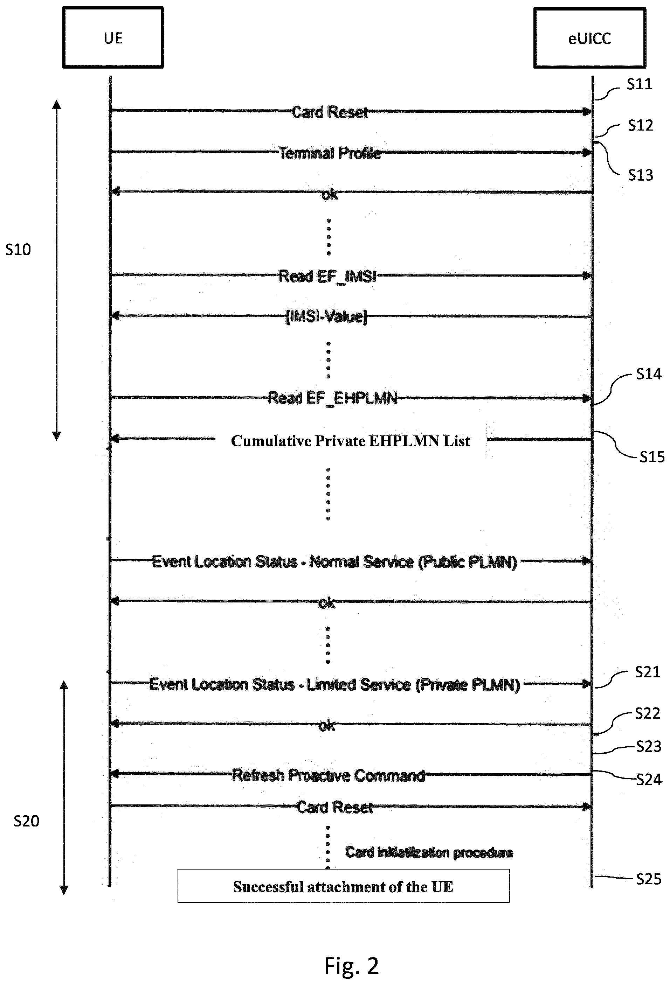

When the UE 30 is in an area where only the public network 10 from the MNO is present, it uses a conventional method to attach to the public network 10. Once the UE enters into an area where both the public network 10 and the private network 20, the eUICC application 50 allows the UE 30 to automatically attach to the private network 20. This process will be described in details in Fig. 2.

Fig. 2 shows a process of allowing a User Equipment (UE) to automatically attach or connect to a private network by using an embedded Universal Integrated Circuit Card (eUICC) application.

The process consists mainly of two steps, namely a first step S10 of prioritizing the private network by the eUICC application by forcing the UE to understand the private network as a Home preferred network and a second step S20 of switching to a private profile corresponding to the private network by the eUICC. These two steps consists of several sub-steps, respectively, which will be explained in the following paragraphs.

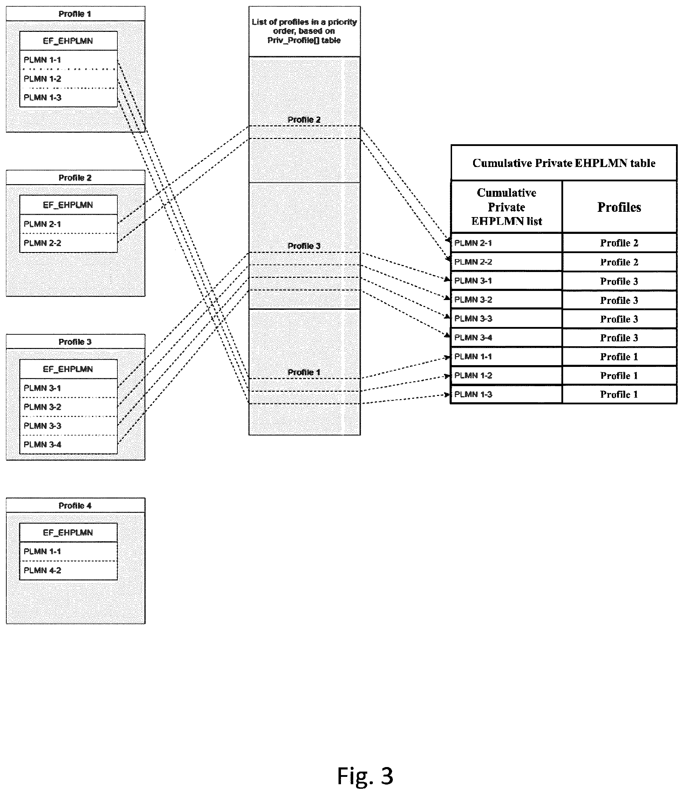

Firstly, either the UE instructs the eUICC to reset in a step of "Card Reset", or such a reset is performed in any other suitable way, for example by a power up or cold reset (for example, turning of an on). On reset, an eUICC application has performed a step S11 of configuring a list of private profile entries which are sorted in a required order according to one or more operational profile filter conditions contained in a table. This process will be described in details in Fig. 3. Once the UE starts up, the eUICC application performs a step S12 of iterating through the list of private profile entries configured above. Based on these private profile entries which are filtered in a required order, the eUICC application further performs a step S13 of building a cumulative private EHPLMN table which contains a cumulative private EHPLMN list and corresponding private profiles. The cumulative private EHPLMN table will be explained in details in Fig. 3.

When or after the UE is powered on or the eUICC is reset, a terminal profile is transmitted from the UE to the eUICC. The terminal profile is used to inform the eUICC about which features and functions are supported by the device. This includes things like network and connectivity capabilities, user interface features, and other specific functionalities. This information allows the eUICC to tailor its behavior to the specific capabilities of the device. For instance, if a device doesn't support a certain network protocol, the eUICC will know not to attempt to use that protocol.

Thereafter or meanwhile, the UE will read the EF_IMSI file on the eUICC to get the IMSI, which it then uses to register with the cellular network. This allows the UE to connect to a public network and start transmitting and receiving data. "EF" stands for Elementary File. This is a specific type of file on the card that contains data. The EF_IMSI file contains the IMSI, which is a unique identifier for the user of the public network. This IMSI is used by the network to identify and authenticate the user. The IMSI consists of MCC (Mobile Country Code) which identifies the country of the network operator, MNC (Mobile Network Code) which identifies the specific network operator within that country and MSIN (Mobile Subscription Identification Number) which identifies the individual user within the network.

Thereafter, an IMSI-Value is transmitted from the eUICC to the UE. The IMSI-Value is a unique string of numbers that identifies each user of a cellular network. It's typically 15 digits long, but can be shorter.

Thereafter or meanwhile, the eUICC application performs a step S14 of hacking a "EF _EHPLMN file Read Binary command response" and then performs a step S15 of replacing content of an EHPLMN list of a currently enabled public profile with the cumulative private EHPLMN list generated above which contains the private network, in order to prioritize the private network. "EF_EHPLMN" stands for Elementary File Equivalent Home Public Land Mobile Network, which is a specific file on the eUICC that contains the list of EHPLMNs, or networks that are considered equivalent to the home network for the purpose of network selection. "Read Binary command" is a specific command that is sent to the eUICC to read the binary data contained in the EF_EHPLMN file. "Command response" is the data returned by the eUICC after the "Read Binary command" has been executed. Therefore, the "EF_EHPLMN file Read Binary command response" refers to the list of EHPLMNs returned by the eUICC after a Read Binary command has been executed on the EF_EHPLMN file.

Thereafter, the cumulative private EHPLMN list is transmitted from the eUICC to the UE as if it were the EHPLMN list of the currently enable public profile. At this point, the UE understands the private networks contained in the cumulative private EHPLMN list as Home Networks, i.e. preferred networks.

When the UE is in an area where only the public network of the MNO is present and the private network of an OEM is not present, the UE attaches or connects to the public network of the MNO as usual. "Event Location Status" is a notification or update that's triggered when there's a change in the UE's network location. This could happen, for example, when the UE moves from one cell to another, or from one tracking area to another.

Once the UE enters into an area where both the public network and the private network are present, an event will be established by the UE and transmitted to the eUICC. If the UE is attached to non-home network (i.e., not to one of the networks listed in EHPLMN), the UE will, according to ETSI specifications, periodically scan for higher priority networks (i.e., those from EHPLMN). Once such a network is found, the UE will try to attach to it. Independent of the attachment result, the UE will send an Event Location Status and/or Network rejection event to the eUICC, informing the eUICC about the attachment attempt. Correspondingly, the "Event Location Status" will be triggered and transmitted to the eUICC. This will cause the eUICC to retrieve MCC/MNC of the network the UE tried to attach to (directly from the event data or by using Provide Local Information proactive command towards the UE). Knowing the MCC/MNC, the eUICC will be able to perform all the further activity. In particular, the eUICC performs a step S21 of receiving the event from the UE. Thereafter, the eUICC performs a step S22 of extracting the MCC/MNC value contained in the event, if these values are present in the event. In the case of a rejection during the attachment attempt (i.e., when the network does not allow the UE to attach to it), the Event Location Status will not contain the MCC/MNC value. However, in such a case, it is still possible to retrieve the MCC/MNC value using the Provide Local Information proactive command. Alternatively, in the case of a rejection, the Network Rejection Event (which contains the MCC/MNC value) can be used to extract the MCC/MNC value. In general, extracting the MCC/MNC value refers to one of these methods of obtaining the MCC/MNC value. After extracting the value, the eUICC further performs a step S23 of searching the cumulative private EHLMN list to find a value matching the extracted MCNN/MNC value. In case a matching value is found in the cumulative private EHLMN list, the eUICC performs a step S24 of identifying the private profile corresponding to the matching value in the cumulative provide EHLMN table which is shown in Fig. 3.

After identifying the private profile, the eUICC seamlessly/automatically switches the operational profile to the private profile to active S25 the private profile which contains proper credentials to make the attachment succeed. This step includes a refresh operation which is realized by "Refresh Proactive Command" which is a command used by the eUICC to request the device to reset, reload files, or update the applications that are stored on the eUICC.

The "private" and "public" may also be understood in a broad sense. That is, the "private profile" may be understood as a profile that eUICC shall switch to, if the corresponding network - private network - is present. The "public profile" may be understood as a default profile - also a fallback profile - which should be enabled when currently enabled private profile has no connectivity.

FIG. 3 shows a process of configuring a list of private profiles which are sorted in a required order according to one or more operational profile filter conditions contained in a table.

In the left part of Fig. 3, a plurality of private profiles is prepared, namely Profile 1, Profile 2, Profile 3 and Profile 4. These private profiles may be preloaded onto the eUICC during the production. Each of the profiles has its own EHPLMN list contained in the "EF_EHPLMN". The EHPLMN list is used by the UE when it needs to select a network. Each EHLMN list contains a plurality of PLMNs. A Public Land Mobile Network (PLMN) is a mobile network that's managed by an operator. Each PLMN is identified by a combination of a Mobile Country Code (MCC) and a Mobile Network Code (MNC). This MCC-MNC combination uniquely identifies a mobile network operator in a specific country. The EF_EHPLMN contains three PLMNs, namely PLMN 1-1, PLMN 1-2 and PLMN 1-3, wherein 1-1 means it is the first PLMN in the Profile 1 and 1-2 means it is the second PLMN in the Profile 1.

In the middle part of Fig. 3, there is provided a list of profile entries in a priority order based on Priv_Profile[] table. This Priv_Profile[] table is configured by the eUICC application and contains one or more operational profile filter condition(s). The conditions may be formulated as "Profile IMSI matching the pattern XXX...X' AND/OR Profile ISD AID matching pattern 'YYY...Y' AND/OR ICCID matching the pattern 'ZZZ...Z‴. According to a preset condition, Profile 2 is set as prior to Profile 3 which is set prior to Profile 1 and Profile 4 is not entered.

In the right part of Fig. 3, there is provided a cumulative private EHPLMN table which is generated by iterating through the private profile entries in the middle part according to a priority sequence of each entry. The priority sequence in this case is Profile 2, Profile 3 and Profile 1 as set in the middle part. As a result, the cumulative private EHPLMN table contains two columns, i.e. a left column and a right column. The left column is a cumulative private EHPLMN list containing content of "EF_EHPLMN" files of the Profiles 2, 3 and 1 in the priority sequence as set in the middle part. The right column contains the profiles from which the respective PLMN - a combination of MCC and MNC - comes from. As shown in the right part of Fig. 2, the "PLMN 2-1" in the left column comes from the "Profile 2" and the "PLMN 3-1" in the left column comes from the "Profile 3".

The method as described through the embodiment above, allows the eUICC application firstly to internally gather EHPLMNs from all private and disabled profiles stored on the eUICC to generate a cumulative private EHPLMN list and then transmits the cumulative private EHPLMN list to the UE as if it were EHPLMN list of a currently enabled public profile. An efficient solution is thus provided for detecting the presence of the private network and forcing the eUICC to switch the operational profile to a private profile corresponding to the private network to allow a successful attachment. (technical problem).

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for allowing a UE, User Equipment, to automatically attach or connect to a private network, by using an eUICC, embedded Universal Integrated Circuit Card, application, the method comprising:
- prioritizing (S10), by the eUICC application, the private network by replacing (S15) content of a public EHPLMN, Equivalent Home Public Land Mobile Network, list of a public profile, with a cumulative private EHPLMN list which contains the private network, by transmitting the cumulative private EHPLMN list, via the eUICC, to the UE as if it were a EHPLMN list of a currently enabled public profile, wherein the cumulative private EHPLMN list is generated by the eUICC application by internally gathering EHPLMNs from all private and disabled profiles stored on the eUICC; and
- when the UE tries to attach or connect to the private network, switching (S20), by the eUICC, to a private profile corresponding to the private network, while the public profile is still enabled, wherein the private profile contains credentials for the attachment or connection.

2. The method according to claim 1, wherein prioritizing (S10) the private network further comprises:
- hacking (S14), by the eUICC application, Read Binary command response of EF_EHPLMN file of the public profile, when UE reads the EF_EHPLMN file during its initialization.

3. The method according to claim 1 or 2, wherein prioritizing (S10) the private network further comprises:
- configuring (S11), by the eUICC application, a list of private profile entries containing one or more operational profile filter conditions;
- when the UE starts up, iterating (S12), by the eUICC application, through the private profile entries; and
- building (S13), by the eUICC application, a cumulative private EHPLMN table containing the cumulative private EHPLMN list which comprises EHPLMN items from each private profile and their corresponding private profiles.

4. The method of any one of preceding claims, wherein switching to a private profile of the private network comprises:
- receiving (S21), by the eUICC, an event of the UE;
- extracting (S22), by the eUICC, MCC, Mobile Country Code, /MNC, Mobile Network Code, value from data of the event;
- searching (S23), by the eUICC, a value matching the extracted MCC/ MNC value;
- identifying (S24), by the eUICC, the private profile according to the searched value; and
- activating (S25), by the eUICC, the private profile.

5. The method of claim 3, wherein the one or more operational profile filter conditions comprises:
- whether profile IMSI, International Mobile Subscriber Identity, matches a predetermined pattern; and/or
- whether profile ISDP AID, Access Identifier, matches a predetermined pattern; and/or
- whether profile ICCID, Integrated Circuit Card Identification Number, matches a predetermined pattern.

6. The method of any one of the preceding claims, wherein the credentials are network authentication parameters or values which are used to attach a network.

7. The method of any one of the preceding claims, wherein service N°71, is enabled by the eUICC application by adjusting a corresponding value in a USIM Service Table file, UST file.

8. The method of any one of the preceding claims, wherein the cumulative private EHPLMN list is derived from individual EHPLMN of each private profile.

9. An eUICC, embedded Universal Integrated Circuit Card, application, for allowing a UE, User Equipment, to attach or connect to a private network is configured to:
- prioritize, for the UE, the private network by replacing content of a public EHPLMN, Equivalent Home Public Land Mobile Network, list with a cumulative private EHPLMN list which contains the private network, by transmitting the cumulative private EHPLMN list, via the eUICC, to the UE as if it were a EHPLMN list of a currently enabled public profile, wherein the cumulative private EHPLMN list is generated by the eUICC application by internally gathering EHPLMNs from all private and disabled profiles stored on the eUICC; and
- when the UE tries to attach or connect to the private network, cause the eUICC to switch to a private profile corresponding to the private network, while the public profile is still enabled, wherein the private profile contains credentials for the attachment or connection.

10. The eUICC application of claim 9, wherein the eUICC application is further configured to hack Read Binary command response of EF_EHPLMN file of the public profile, when UE reads the EF_EHPLMN file during its initialization.

11. The eUICC application of claim 9 or 10, wherein, to enable the UE to prioritize the private network, the eUICC application is further configured to:
- configure a list of private profile entries containing one or more operational profile filter conditions;
- when the UE starts up, iterate through the private profile entries;
- build a cumulative private EHPLMN table containing the cumulative private EHPLMN list which comprises EHPLMN items from each private profile and their corresponding private profiles;
- return the cumulative private EHPLMN list to the UE.

12. The eUICC application of any one of claims 9 to 11, wherein the eUICC application is configured to enable services of EHPLMN and N°71.

13. The eUICC application of any one of claims 9 to 12, wherein the eUICC application is configured to derive the cumulative private EHPLMN list from individual EHPLMN of each private profile.

14. An eUICC comprising an eUICC application according to any one of claims 9 to 13.

15. A computer program product, comprising instructions which, when executed by a computer of a UE, User Equipment, cause the UE to automatically attach or connect to a private network, by using a eUICC, embedded Universal Integrated Circuit Card, application by:
- prioritizing, by the eUICC application, the private network by replacing content of a public EHPLMN, Equivalent Home Public Land Mobile Network list, with a cumulative private EHPLMN list which contains the private network, by transmitting the cumulative private EHPLMN list, via the eUICC, to the UE as if it were a EHPLMN list of a currently enabled public profile, wherein the cumulative private EHPLMN list is generated by the eUICC application by internally gathering EHPLMNs from all private and disabled profiles stored on the eUICC; and
- when the UE tries to attach or connect to the private network, switching, by an eUICC, to a private profile corresponding to the private network, while the public profile is still enabled, wherein the private profile contains credentials for the attachment or connection.

## Patentansprüche

1. Verfahren, zum Erlauben einer Benutzerausstattung, UE, sich automatisch mit einem privaten Netzwerk anzubinden oder zu verbinden, unter Verwendung einer Anwendung einer eingebetteten universelle integrierte Schaltkreiskarte, eUICC-Anwendung, das Verfahren umfassend:
- Priorisieren (S10) des privaten Netzwerks durch die eUICC-Anwendung, durch Ersetzten (S15) des Inhalts einer öffentlichen EHPLMN-Liste, Equivalent Home Public Land Mobile Network Liste, eines öffentlichen Profils durch eine kumulative private EHPLMN-Liste, die das private Netzwerk enthält, durch Übertragen der kumulativen privaten EHPLMN-Liste über die eUICC an die UE, als wäre es eine EHPLMN-Liste eines derzeit aktivierten öffentlichen Profils, wobei die kumulative private EHPLMN-Liste von der eUICC-Anwendung durch internes Sammeln von EHPLMNs aus allen privaten und deaktivierten Profilen, die auf der eUICC gespeichert sind, erzeugt wird; und
- wenn die UE versucht, sich mit dem privaten Netzwerk zu verbinden, Umschalten (S20), durch die eUICC, zu einem privaten Profil, das dem privaten Netzwerk entspricht, während das öffentliche Profil noch aktiviert ist, wobei das private Profil Anmeldedaten für das Anbinden oder Verbinden enthält.

2. Verfahren nach Anspruch 1, wobei das Priorisieren (S10) des privaten Netzwerks ferner umfasst:
- Hacken (S14) durch die eUICC-Anwendung, der "Read Binary"Kommando-Antwort der EF_EHPLMN-Datei des öffentlichen Profils, wenn das UE die EF_EHPLMN-Datei während seiner Initialisierung liest.

3. Verfahren gemäß Anspruch 1 oder 2, wobei das Priorisieren (S10) des privaten Netzwerks ferner umfasst:
- Konfigurieren (S11), durch die eUICC-Anwendung, einer Liste von privaten Profileinträgen, die eine oder mehrere operative Profilfilterbedingungen enthalten;
- beim Starten des UE, Iterieren (S12), durch die eUICC-Anwendung, durch die privaten Profileinträge; und
- Erstellen (S13), durch die eUICC-Anwendung, einer kumulativen privaten EHPLMN-Tabelle, die die kumulative private EHPLMN-Liste enthält, welche EHPLMN-Elemente aus jedem privaten Profil und deren entsprechende private Profile umfasst.

4. Verfahren nach einem der vorstehenden Ansprüche, wobei das Umschalten auf ein privates Profil des privaten Netzwerks umfasst:
- Empfangen (S21), durch die eUICC, eines Ereignisses des UE;
- Extrahieren (S22), durch die eUICC, eines Mobile Country Code Werts, MCC-Werts, und eines Mobile Network Code Werts, MNC-Werts, aus den Daten des Ereignisses;
- Suchen (S23), durch die eUICC, eines Wertes, der mit dem extrahierten MCC/MNC-Wert übereinstimmt;
- Identifizieren (S24), durch die eUICC, des privaten Profils gemäß dem gesuchten Wert; und
- Aktivieren (S25), by the eUICC, des privaten Profils.

5. Verfahren nach Anspruch 3, wobei die eine oder mehreren operativen Profilfilterbedingungen umfassen:
- ob das Profil IMSI, International Mobile Subscriber Identity, mit einem vorgegebenen Muster übereinstimmt; und/oder
- ob das Profil-ISDP-AID, Access Identifier, mit einem vorgegebenen Muster übereinstimmt; und/oder
- ob das Profil-ICCID, Integrated Circuit Card Identification Number, mit einem vorgegebenen Muster übereinstimmt.

6. Verfahren nach einem der vorstehenden Ansprüche, wobei die Anmeldedaten Netzwerkauthentifizierungsparameter oder -werte sind, die zum Anbinden an oder Herstellen einer Verbindung mit einem Netzwerk verwendet werden.

7. Verfahren nach einem der vorstehenden Ansprüche, wobei Dienst Nr. 71 durch die eUICC-Anwendung aktiviert wird, indem ein entsprechender Wert in einer USIM-Diensttabellendatei, UST-Datei, angepasst wird.

8. Verfahren nach einem der vorstehenden Ansprüche, wobei die kumulative private EHPLMN-Liste aus individuellen EHPLMN jedes privaten Profils abgeleitet wird.

9. Embedded Universal Integrated Circuit Card Anwendung, eUICC-Anwendung, zum Erlauben einer Benutzerausrüstung, UE, sich an ein privates Netzwerk anzubinden oder damit zu verbinden, wobei die eUICC-Anwendung konfiguriert ist:
- für das UE das private Netzwerk zu priorisieren, durch Ersetzen des Inhalts einer öffentlichen Equivalent Home Public Land Mobile Network Liste, EHPLMN-Liste, mit einer kumulativen EHPLMN-Liste, die das private Netzwerk enthält, durch Übertragen der kumulativen privaten EHPLMN-Liste über die eUICC an das UE, als wäre es eine EHPLMN-Liste eines derzeit aktivierten öffentlichen Profils, wobei die kumulative private EHPLMN-Liste von der eUICC-Anwendung durch internes Sammeln von EHPLMNs aus allen privaten und deaktivierten Profilen, die auf der eUICC gespeichert sind, generiert wird; und
- wenn das UE versucht, sich mit dem privaten Netzwerk anzubinden oder zu verbinden, Veranlassen der eUICC, zu einem privaten Profil zu wechseln, das dem privaten Netzwerk entspricht, während das öffentliche Profil weiterhin aktiviert ist, wobei das private Profil Anmeldedaten für das Anbinden oder Verbinden enthält.

10. eUICC-Anwendung nach Anspruch 9, wobei die eUICC-Anwendung ferner so konfiguriert ist, dass sie die "Read Binary"-Kommando-Antwort der EF_EHPLMN-Datei des öffentlichen Profils hackt, wenn das UE die EF_EHPLMN-Datei während seiner Initialisierung liest.

11. eUICC-Anwendung gemäß Anspruch 9 oder 10, wobei die eUICC-Anwendung, um dem UE die Priorisierung des privaten Netzwerks zu ermöglichen, ferner konfiguriert ist:
- eine Liste privater Profileinträge zu konfigurieren, die eine oder mehrere operative Profilfilterbedingungen enthält;
- beim Start des UE durch die privaten Profileinträge zu iterieren;
- eine kumulative private EHPLMN-Tabelle zu erstellen, die die kumulative private EHPLMN-Liste enthält, welche EHPLMN-Elemente aus jedem privaten Profil und deren entsprechende private Profile umfasst;
- die kumulative private EHPLMN-Liste an das UE zurückzugeben.

12. eUICC-Anwendung nach einem der Ansprüche 9 bis 11, wobei die eUICC-Anwendung konfiguriert ist, Dienste von EHPLMN und N°71 zu aktivieren.

13. eUICC-Anwendung nach einem der Ansprüche 9 bis 12, wobei die eUICC-Anwendung konfiguriert ist, die kumulative private EHPLMN-Liste aus einzelnen EHPLMN jedes privaten Profils abzuleiten.

14. eUICC, umfassend eine eUICC-Anwendung gemäß einem der Ansprüche 9 bis 13.

15. Computerprogrammprodukt, das Anweisungen umfasst, die, wenn sie von einem Computer ausgeführt werden, den Computer veranlassen, einer Benutzerausstattung, UE, zu ermöglichen, sich automatisch mit einem privaten Netzwerk anzubinden oder zu verbinden, indem eine eUICC-Anwendung verwendet wird, durch:
- Priorisieren des privaten Netzwerks durch die eUICC-Anwendung, indem der Inhalt einer öffentlichen EHPLMN-Liste durch eine kumulative private EHPLMN-Liste ersetzt wird, die das private Netzwerk enthält, durch Übertragen der kumulativen privaten EHPLMN-Liste über die eUICC an das UE, als wäre es eine EHPLMN-Liste eines derzeit aktivierten öffentlichen Profils, wobei die kumulative private EHPLMN-Liste von der eUICC-Anwendung durch internes Sammeln von EHPLMNs aus allen privaten und deaktivierten Profilen, die auf der eUICC gespeichert sind, generiert wird; und
- wenn das UE versucht, sich mit dem privaten Netzwerk anzubinden oder zu verbinden, Wechseln, durch eine eUICC, zu einem privaten Profil, das dem privaten Netzwerk entspricht, während das öffentliche Profil noch aktiviert ist, wobei das private Profil Anmeldedaten für das Anbinden oder Verbinden enthält.

## Revendications

1. Procédé pour permettre à un équipement utilisateur, UE, de se rattacher ou de se connecter automatiquement à un réseau privé, à l'aide d'une application de carte de circuit intégré universelle incorporée, eUICC, le procédé comprenant :
- la priorisation (S10), par l'application eUICC, du réseau privé par le remplacement (S15) d'un contenu d'une liste de réseaux mobiles terrestres publics de rattachement équivalents, EHPLMN, publics d'un profil public, par une liste d'EHPLMN privés cumulés qui contient le réseau privé, par la transmission de la liste d'EHPLMN privés cumulés, via l'eUICC, à l'UE comme s'il s'agissait d'une liste d'EHPLMN d'un profil public couramment activé, dans lequel la liste d'EHPLMN privés cumulés est générée par l'application eUICC par le recueil interne d'EHPLMN à partir de tous les profils privés et désactivés stockés sur l'eUICC ; et
- lorsque l'UE essaye de se rattacher ou de se connecter au réseau privé, la commutation (S20), par l'eUICC, à un profil privé correspondant au réseau privé, pendant que le profil public est toujours activé, dans lequel le profil privé contient des identifiants pour le rattachement ou la connexion.

2. Procédé selon la revendication 1, dans lequel la priorisation (S10) du réseau privé comprend en outre :
- le piratage (S14), par l'application eUICC, d'une réponse de commande Read Binary d'un fichier EF_EHPLMN du profil public, lorsque l'UE lit le fichier EF_EHPLMN pendant son initialisation.

3. Procédé selon la revendication 1 ou 2, dans lequel la priorisation (S10) du réseau privé comprend en outre :
- la configuration (S11), par l'application eUICC, d'une liste d'entrées de profil privé contenant une ou plusieurs conditions de filtre de profil opérationnel ;
- lorsque l'UE démarre, l'itération (S12), par l'application eUICC, à travers les entrées de profil privé ; et
- la construction (S13), par l'application eUICC, d'une table d'EHPLMN privés cumulés contenant la liste d'EHPLMN privés cumulés qui comprend des éléments EHPLMN de chaque profil privé et leurs profils privés correspondants.

4. Procédé selon l'une quelconque des revendications précédentes, dans lequel la commutation à un profil privé du réseau privé comprend :
- la réception (S21), par l'eUICC, d'un événement de l'UE ;
- l'extraction (S22), par l'eUICC, d'une valeur de code de pays mobile, MCC/code de réseau mobile, MNC, à partir de données de l'événement ;
- la recherche (S23), par l'eUICC, d'une valeur correspondant à la valeur MCC/MNC extraite ;
- l'identification (S24), par l'eUICC, du profil privé en fonction de la valeur recherchée ; et
- l'activation (S25), par l'eUICC, du profil privé.

5. Procédé selon la revendication 3, dans lequel le ou les conditions de filtre de profil opérationnel comprennent :
- si une identité d'abonné mobile internationale, IMSI, de profil correspond à un motif prédéterminé ; et/ou
- si un identifiant d'accès, ISDP AID, de profil correspond à un motif prédéterminé ; et/ou
- si un numéro d'identification de carte de circuit intégré, ICCID, de profil correspond à un motif prédéterminé.

6. Procédé selon l'une quelconque des revendications précédentes, dans lequel les identifiants sont des paramètres ou des valeurs d'authentification de réseau qui sont utilisés pour se rattacher à un réseau.

7. Procédé selon l'une quelconque des revendications précédentes, dans lequel un service N°71 est activé par l'application eUICC par l'ajustement d'une valeur correspondante dans un fichier de table de services USIM, fichier UST.

8. Procédé selon l'une quelconque des revendications précédentes, dans lequel la liste d'EHPLMN privés cumulés est dérivée d'un EHPLMN individuel de chaque profil privé.

9. Application de carte de circuit intégré universelle incorporée, eUICC, pour permettre à un équipement utilisateur, UE, de se rattacher ou de se connecter à un réseau privé, configurée pour :
- prioriser, pour l'UE, le réseau privé par le remplacement d'un contenu d'une liste de réseaux mobiles terrestres publics de rattachement équivalents, EHPLMN, publics, par une liste d'EHPLMN privés cumulés qui contient le réseau privé, par la transmission de la liste d'EHPLMN privés cumulés, via l'eUICC, à l'UE comme s'il s'agissait d'une liste d'EHPLMN d'un profil public couramment activé, dans laquelle la liste d'EHPLMN privés cumulés est générée par l'application d'eUICC par le recueil interne d'EHPLMN à partir de tous les profils privés et désactivés stockés sur l'eUICC ; et
- lorsque l'UE essaye de se rattacher ou de se connecter au réseau privé, amener l'eUICC à commuter à un profil privé correspondant au réseau privé, pendant que le profil public est toujours activé, dans laquelle le profil privé contient des identifiants pour le rattachement ou la connexion.

10. Application eUICC selon la revendication 9, dans laquelle l'application eUICC est en outre configurée pour pirater une réponse de commande Read Binary d'un fichier EF_EHPLMN du profil public, lorsque l'UE lit le fichier EF_EHPLMN pendant son initialisation.

11. Application eUICC selon la revendication 9 ou 10, dans laquelle, pour activer l'UE pour prioriser le réseau privé, l'application eUICC est en outre configurée pour :
- configurer une liste d'entrées de profil privé contenant une ou plusieurs conditions de filtre de profil opérationnel ;
- lorsque l'UE démarre, itérer à travers les entrées de profil privé ;
- construire une table d'EHPLMN privés cumulés contenant la liste d'EHPLMN privés cumulés qui comprend des éléments EHPLMN de chaque profil privé et leurs profils privés correspondants ;
- retourner la liste d'EHPLMN privés cumulés à l'UE.

12. Application eUICC selon l'une quelconque des revendications 9 à 11, dans laquelle l'application eUICC est configurée pour activer des services d'EHPLMN et N°71.

13. Application eUICC selon l'une quelconque des revendications 9 à 12, dans laquelle l'application eUICC est configurée pour dériver la liste d'EHPLMN privés cumulés à partir d'un EHPLMN individuel de chaque profil privé.

14. eUICC comprenant une application eUICC selon l'une quelconque des revendications 9 à 13.

15. Produit de programme informatique, comprenant des instructions qui, lorsqu'elles sont exécutées par un ordinateur d'un équipement utilisateur, UE, amènent l'UE à se rattacher ou se connecter automatiquement à un réseau privé, à l'aide d'une application de carte de circuit intégré universelle incorporée, eUICC, par :
- la priorisation, par l'application eUICC, du réseau privé par le remplacement d'un contenu d'une liste de réseaux mobiles terrestres publics de rattachement équivalents, EHPLMN, publics par une liste d'EHPLMN privés cumulés qui contient le réseau privé, par la transmission de la liste d'EHPLMN privés cumulés, via l'eUICC, à l'UE comme s'il s'agissait d'une liste d'EHPLMN d'un profil public couramment activé, dans lequel la liste d'EHPLMN privés cumulés est générée par l'application eUICC par le recueil interne d'EHPLMN à partir de tous les profils privés et désactivés stockés sur l'eUICC ; et
- lorsque l'UE essaye de se rattacher ou de se connecter au réseau privé, la commutation, par l'eUICC, à un profil privé correspondant au réseau privé, pendant que le profil public est toujours activé, dans lequel le profil privé contient des identifiants pour le rattachement ou la connexion.
